# EUROPÄISCHE PATENTSCHRIFT

(11) **EP 0 568 996 B1**
(45) Veröffentlichungstag und Bekanntmachung des Hinweises auf die Patenterteilung: **01.03.1995**
(21) Anmeldenummer: 93107295.3
(22) Anmeldetag: 05.05.1993
(51) Int. Cl.: B60R 22/18, B60R 22/46

(54) **Linearantrieb für einen Gurtstraffer**
Linear drive for a belt tensioner
Entraînement linéaire pour tendeur de ceinture de sécurité

(30) Priorität: 05.05.1992 DE 4214837; 13.07.1992 DE 4222985
(43) Veröffentlichungstag der Anmeldung: 10.11.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 455 859
- EP-A- 0 456 853
- DE-A- 4 109 623
- US-A- 4 441 738

## Beschreibung

Die Erfindung betrifft einen Linearantrieb für einen Gurtstraffer in einem Fahrzeug-Sicherheitsgurtsystem, mit einem Zylinder, in dem ein Kolben verschiebbar aufgenommen ist, einem pyrotechnischen Gasgenerator, der einen Schlagzünder aufweist, einer fahrzeugsensitiven Sensormasse, die in einem am Fahrzeugaufbau zu befestigenden Gehäuse verschiebbar angeordnet ist, und einem Schlagteil, das durch eine Arretiereinrichtung in einer Ruhestellung im Abstand von dem Schlagzünder des Gasgenerators gehalten und durch Federkraft in Richtung gegen den Schlagzünder belastet ist, wobei die durch die Arretiereinrichtung bewirkte Arretierung des Schlagteils durch Bewegung der Sensormasse lösbar ist und der Kolben durch die vom Gasgenerator bei durch Aufschlagen des Schlag- teils auf dem Schlagzünder ausgelöster Aktivierung freige- setzten Druckgase beaufschlagt wird.

Ein derartiger Antrieb ist aus der EP-A-0 456 853 bekannt.

Ein solcher Linearantrieb kann getrennt von einem Gurtaufroller oder Beschlagteil des Sicherheitsgurtsystems angeordnet werden, da der Kolben über ein Zugseil mit dem Gurtaufroller bzw. Beschlagteil verbunden ist. Die Verwendung eines Zugseils eröffnet auch die Möglichkeit einer Umlenkung, so daß große Freiheit hinsichtlich der Unterbringung des Linearantriebs im Fahrzeug relativ zu den übrigen Bestandteilen des Sicherheitsgurtsystems besteht.

Durch die Erfindung wird nun ein Linearantrieb für einen Gurtstraffer in einem Fahrzeug-Sicherheitsgurtsystem geschaffen, der sich durch eine besonders schlanke Bauform auszeichnet und geeignet ist, um im Schwellerbereich des Fahrzeugaufbaus untergebracht zu werden.

Der erfindungsgemäße Linearantrieb für einen Gurtstraffer ist dadurch gekennzeichnet, daß das Gehäuse in der Verlängerung des Zylinders angeordnet und mit diesem starr verbunden ist, daß die Sensormasse und das Schlagteil in zueinander und zur Achse des Zylinders parallelen Richtungen verschiebbar sind und daß die Arretiereinrichtung ein durch die Federbeaufschlagung des Schlagteils quer zu diesen Richtungen bewegbares Arretierteil aufweist, an dem sich das Schlagteil in seiner Ruhestellung abstützt. Durch die Anordnung des Gehäuses in der Verlängerung des Zylinders entsteht die angestrebte, gestreckte und schlanke Bauform. Die im Inneren des Gehäuses untergebrachten beweglichen Teile wie Sensormasse und Schlagteil sind parallel zur Achse des Zylinders geführt, so daß die Querabmessungen des Gehäuses gering gehalten werden können. Auf diese Weise können die Außenabmessungen des Gehäuses, dessen Querschnitt kreisrund oder rechteckig sein kann, auf wenig mehr als den Durchmesser des Zylinders beschränkt werden. Auch der Gasgenerator ist leicht in dem Gehäuse unterzubringen, das zu diesem Zweck mit einer passenden Bohrung versehen wird, die parallel zur Achse des Gehäuses verläuft.

Ein weiterer Beitrag zur kompakten Bauform ergibt sich dadurch, daß bei der bevorzugten Ausführungsform das Schlagteil radial im Inneren der Sensormasse angeordnet ist. Insbesondere weist die Sensormasse einen Kanal auf, worin das Schlagteil verschiebbar aufgenommen und geführt ist.

Der Übergang zwischen dem Zylinder und dem Gehäuse erfolgt vorzugsweise an einem verjüngten Ende des Gehäuses, in welches der Gasgenerator eingesetzt ist. Die Sensormasse ist in den daran anschließenden hohlzylindrischen Abschnitt des Gehäuses eingesetzt.

Das Arretierteil, welches das Schlagteil in seiner Ruhestellung hält, ist allerdings quer zur Längsrichtung des Gehäuses beweglich. Eine Vergrößerung der Außenabmessungen des Gehäuses ist hierfür jedoch nicht notwendig, da dieses Arretierteil nur einen geringen Steuerhub in Radialrichtung ausführen muß. Mehrere Ausführungsformen des Arretierteils und seiner Anordnung sind in den Patentansprüchen 6 bis 10 angegeben. Unter diesen Ausführungsformen ist besonders diejenige hervorzuheben, bei welcher die Sensormasse in zwei zueinander entgegengesetzten Richtungen beweglich ist und eine Auslösung des Gurtstraffers durch Bewegung der Sensormasse in beiden Richtungen erfolgen kann.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen Längsschnitt durch den Zylinder und das einteilig mit diesem verbundene Gehäuse des Gurtstraffers;
- Fig. 2: einen Querschnitt entlang Linie II-II in Fig. 1;
- Fig. 3: einen Längsschnitt entlang Linie III-III in Fig. 2;
- Fig. 4: eine Explosivansicht der in den Figuren 1 bis 3 gezeigten Ausführungsform des Gurtstraffers;
- Fig. 5: einen Längsschnitt einer anderen Ausführungsform des Gurtstraffers;
- Fig. 6: einen Querschnitt entlang Linie VI-VI in Fig. 5;
- Fig. 7: einen Längsschnitt entlang Linie VII-VII in Fig. 6;
- Fig. 8: einen Teilschnitt entlang Linie VIII-VIII in Fig. 6;
- Fig. 9: einen Teilschnitt einer weiteren Ausführungsform des Gurtstraffers;
- Fig. 10: einen Querschnitt entlang Linie X-X in Fig. 9;
- Fig. 11: eine Schnittansicht entlang Linie XI-XI in Fig. 10.
- Fig. 12: einen Längsschnitt einer weiteren Ausführungsform des Linearantriebs;
- Fig. 13: einen Querschnitt entlang Linie XIII-XIII in Fig.12;
- Fig. 14: eine perspektivische Detailansicht einer Arretiereinrichtung;
- Fig. 15: eine aufgeschnittene Perspektivansicht des Linearantriebs; und
- Fig. 16: eine Teilansicht einer Ausführungsvariante.

Der Linearantrieb für einen Gurtstraffer bildet eine gestreckte, schlanke Baugruppe, die aus einem Zylinder 10 und einem starr mit diesem verbundenen, in seiner Verlängerung angeordneten Gehäuse 12 besteht, dessen verjüngtes Ende 12a an dem benachbarten Stirnende des Zylinders 10 angeschlossen und durch Reibschweißung mit diesem verbunden ist. In dem Zylinder 10 ist in herkömmlicher Weise ein Kolben 14 verschiebbar aufgenommen. An diesem Kolben 14 ist ein Zugseil 16 befestigt, das sich geradlinig durch das mit einem entsprechenden Durchgang versehene Gehäuse 12 hindurch erstreckt.

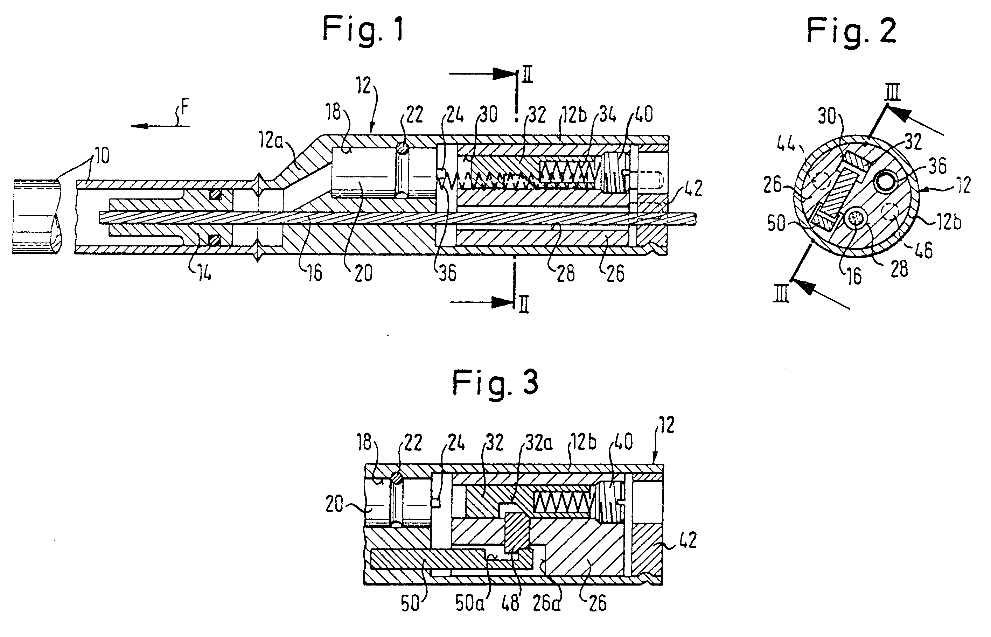

Das verjüngte Ende 12a des Gehäuses 12 ist mit einer zur Achse dieses Gehäuses parallelen Bohrung 18 versehen, in die ein pyrotechnischer Gasgenerator 20 eingesetzt ist. Der Gasgenerator 20 ist mittels eines Stiftes 22 in der Bohrung 18 festgelegt. Ferner ist der Gasgenerator 20 mit einem Schlagzünder versehen, von dem in Fig. 1 ein Stift 24 dargestellt ist.

An das verjüngte Ende 12a des Gehäuses 12 schließt ein hohlzylindrischer Abschnitt 12b des Gehäuses 12 an. In diesem hohlzylindrischen Abschnitt 12b des Gehäuses 12 ist eine allgemein zylinderförmige fahrzeugsensitive Sensormasse 26 verschiebbar aufgenommen. Die Sensormasse 26 weist einen Kanal 28 zur freien Durchführung des Zugseils 16 auf. Ferner ist in der Sensormasse 26 ein Kanal 30 von rechteckigem Querschnitt zur Aufnahme eines in diesem Kanal 30 verschiebbar geführten Schlagteils 32 gebildet. Dieses Schlagteil 32 von gleichfalls rechteckförmigem Querschnitt wird durch eine Druckfeder 34 in Richtung zu dem Stift 24 des Schlagzünders am Gasgenerator 20 belastet, wird jedoch in der in Fig. 1 gezeigten Ruhestellung durch eine Arretiereinrichtung gehalten, die weiter unten beschrieben wird. Die Sensormasse 26 wird durch eine Druckfeder 36, die in einer axialen Bohrung der Sensormasse 26 aufgenommen ist, in Richtung von dem Gasgenerator 20 fort belastet.

Der Kanal 30, in dem das Schlagteil 32 geführt ist, ist an seinem von diesem abgewandten Ende durch einen eingeschraubten Stopfen 40 verschlossen, an dessen Innenseite die Druckfeder 34 abgestützt ist. Ferner ist das freie Ende des Gehäuses 12 durch ein scheibenförmiges Verschlußteil 42 abgeschlossen, in dem zwei Führungsstifte 44, 46 verankert sind, die in entsprechende Führungsbohrungen der Sensormasse 26 eingreifen.

Die oben bereits erwähnte Arretiereinrichtung, die das Schlagteil 32 in seiner Ruhestellung hält, umfaßt ein Arretierteil 48, das in einem senkrecht zur Längsachse der Sensormasse 26 angeordneten Führungskanal verschiebbar angeordnet ist und auf beiden Seiten aus diesem herausragt. Das erste Ende des Arretierteils 48 ragt in den Kanal 30 hinein und greift in eine trapezförmige Aussparung 32a des Schlagteils 32. An diesem ersten Ende des Arretierteils 48 ist eine Rampenfläche gebildet, auf der sich die mit gleicher Schräge ausgebildete Rampenfläche der trapezförmigen Aussparung 32a abstützt. Das zweite Ende des Arretierteils 48 ragt in eine axiale Ausnehmung 26a der Sensormasse 26 hinein. In diese Ausnehmung 26a ragt ferner ein in dem verjüngten Gehäuseteil 12a verankertes Stützteil 50 in Axialrichtung hinein. Dieses Stützteil 50 weist eine axiale Stützfläche für das mit einer Stufe versehene zweite Ende des Arretierteils 48 auf. An diese Stützfläche schließt über eine radiale Stufe eine Ausnehmung 50a des Stützteils 50 an.

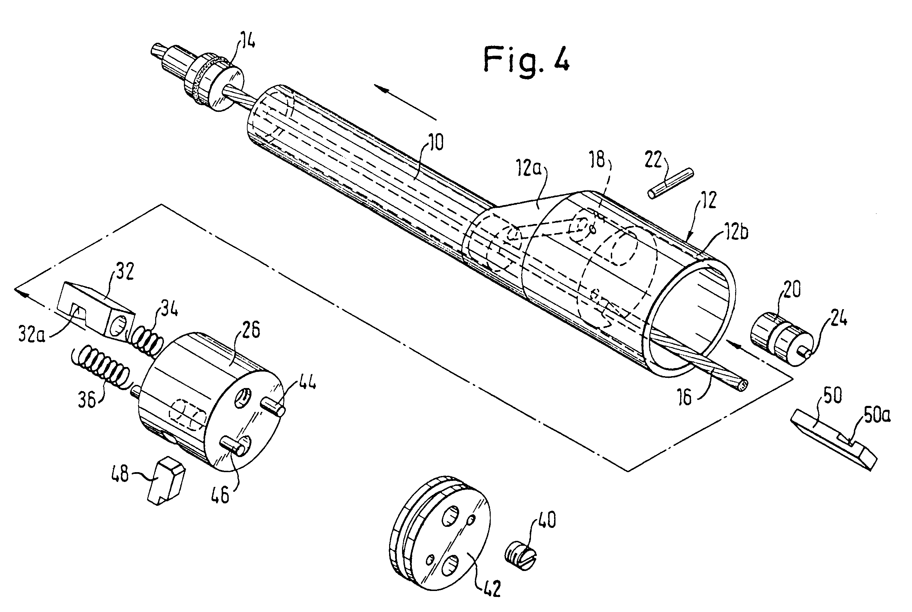

Es wird nun die Arbeitsweise des in den Figuren 1 bis 4 gezeigten Linearantriebs beschrieben. Die aus Zylinder 10 und Gehäuse 12 bestehende gestreckte Baugruppe wird vorzugsweise im Schwellerbereich des Fahrzeugaufbaus angeordnet. Das Zugseil 16 wird an einen Gurtaufroller angeschlossen, der in bekannter Weise mit einer Seilscheibe versehen ist, an deren Umfang das Zugseil 16 angreift. Die Einbauorientierung der Baugruppe wird durch die Fahrtrichtung bestimmt, die in Fig. 1 durch einen Pfeil F symbolisiert ist. Der Zylinder 10 zeigt also in Fahrtrichtung. Das Schlagteil 32 wird durch die Druckfeder 34 gegen den Stift 24 am Schlagzünder des Gasgenerators 20 belastet, wird jedoch durch das Arretierteil 48 in seiner in Fig. 1 gezeigten Ruhestellung gehalten. Sobald nun aber die Sensormasse 26 unter der Wirkung einer starken Fahrzeugverzögerung aufgrund ihrer Massenträgheit die Kraft der Feder 36 überwindet und in Axialrichtung verlagert wird, gleitet die Abstützfläche am zweiten Ende des Arretierteils 48 auf der entsprechenden Stützfläche des Stützteils 50; wenn die Fahrzeugverzögerung ein bestimmtes Maß überschreitet, kann das Arretierteil 48 in die Ausnehmung 50a des Stützteils 50 ausweichen und wird unter der Wirkung der Feder 34 in diese Ausnehmung 50a hineingedrückt, da die Rampenfläche am ersten Ende des Arretierteils 48 mit einer gleich geneigten Rampenfläche an der Ausnehmung 32a des Schlagteils 32 in Eingriff ist. Sobald nun das Arretierteil 48 in die Ausnehmung 50a eingetaucht ist, kann das Schlagteil 32 unbehindert durch die Feder 34 gegen den Stift 24 am Schlagzünder des Gasgenerators 20 getrieben werden. Der Schlagzünder aktiviert nun den Gasgenerator 20, und die von diesem erzeugten Druckgase beaufschlagen den Kolben 14, der nun im Zylinder 10 bewegt wird und das Zugseil 16 mitnimmt.

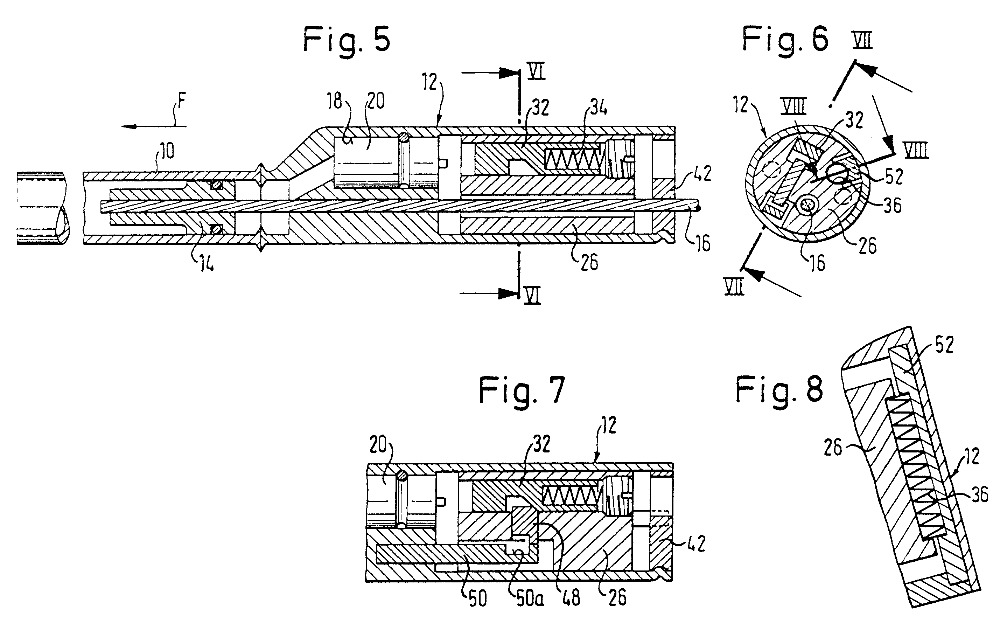

Bei der Ausführungsform nach den Figuren 5 bis 8 ist die Sensormasse 26 sowohl in Fahrtrichtung F als auch in der entgegengesetzten Richtung beweglich. Sie wird durch die Druckfeder 36, die sich an beiden Enden sowohl an der Sensormasse 26 als auch am Gehäuse 12 abstützt, in einer stabilen Mittellage gehalten, da die Druckfeder 36 im gespannten Zustand eingebaut ist. Sie ist in einer Tasche aufgenommen, die durch eine axiale Ausnehmung am Außenumfang der Sensormasse 26 einerseits und durch eine gegenüberliegende Ausnehmung in einer Leiste 52 gebildet ist, welche im Gehäuse 12 angeordnet und mit diesem verankert ist.

Das Arretierteil 48 weicht von dem der zuvor beschriebenen Ausführungsform dadurch ab, daß die dem Stützteil 50 gegenüberliegende, ebene Abstützfläche an einem vorspringenden Ansatz gebildet ist, der beiderseits der Abstützfläche eine senkrecht zurückspringende Schulter aufweist. Das betreffende Ende des Arretierteils 48 kann daher in die Ausnehmung 50a des Stützteils 50 ausweichen, wenn die Sensormasse 26 in der einen oder anderen Richtung fahrzeugsensitiv weit genug ausgelenkt wird. Bei dieser Ausführungsform wird der Gurtstraffer sowohl bei einem Frontalaufprall des Fahrzeugs, als auch bei einem Heckaufprall wirksam.

Im übrigen gleicht die Ausführungsform nach den Figuren 5 bis 8 der nach den Figuren 1 bis 4 und wird daher nicht erneut beschrieben.

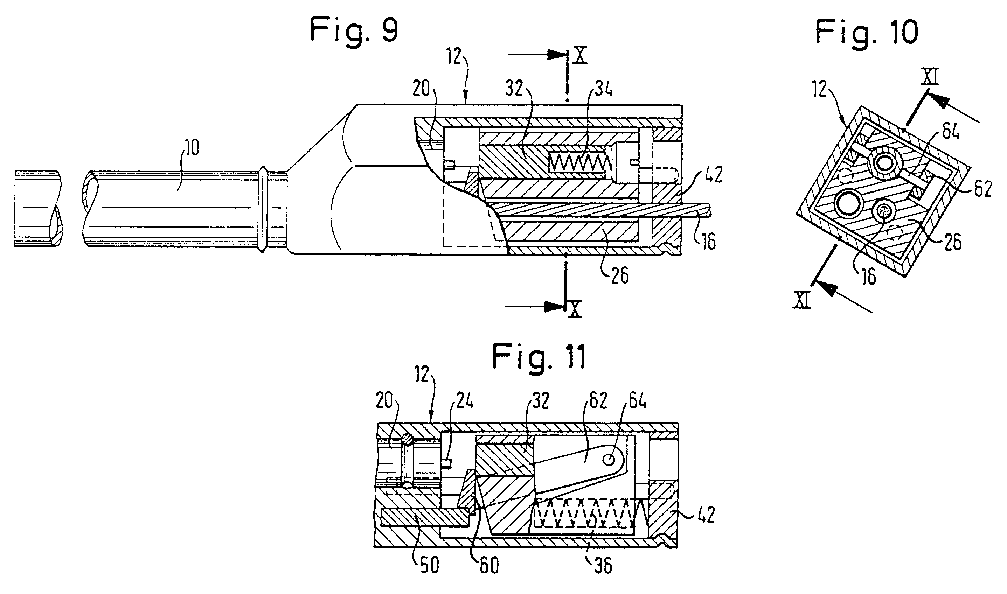

Bei der Ausführungsform nach den Figuren 9 bis 11 ist das Gehäuse 12 im Querschnitt quadratisch ausgebildet. Auch die Sensormasse 26 ist entsprechend allgemein rechteckförmig ausgebildet. Abweichend von den beiden zuvor beschriebenen Ausführungsformen ist das Arretierteil 60 an einem Bügel 62 gebildet, der auf zwei Stiften 64 schwenkbar an der Sensormasse 26 gelagert ist. Das Arretierteil 60 bildet einen Steg des Bügels 62 und stützt sich in gleicher Weise wie bei den zuvor beschriebenen Ausführungsformen auf einem Stützteil 50 ab. Das Schlagteil 32 kommt mit seiner vorderen Stirnfläche, die mit einer Anschrägung versehen ist, an der gegenüberliegenden, ebenfalls angeschrägten Fläche des Arretierteils 60 zur Anlage. Die das Schlagteil 32 beaufschlagende Druckfeder 34 ist bestrebt, das Arretierteil 60 unter Verschwenkung des Bügels 62 allgemein radial seitwärts zu schieben, jedoch stützt sich das Arretierteil 60 auf dem Stützteil 50 ab, solange die Sensormasse 26 sich in der in den Figuren 9 und 11 gezeigten Ruhestellung befindet. Bei ausreichender Verlagerung der Sensormasse 26 in Richtung von dem Zylinder 10 fort kommt jedoch das Arretierteil 60 frei und gleitet an dem Ende des Stützteils 50 vorbei, so daß auch das Schlagteil 32 freigegeben wird.

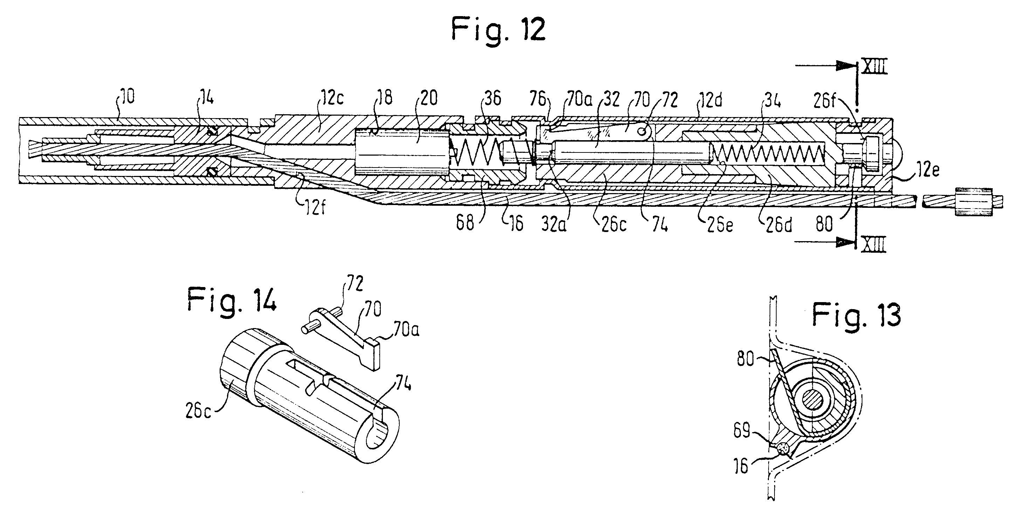

Eine noch schlankere Bauform wird mit der in den Figuren 12 bis 15 gezeigten Ausführungsform erreicht. Das in der Verlängerung des Zylinders 10 angeordnete Gehäuse besteht hier aus drei Teilen: einem ersten Gehäuseteil 12c, welches an den Zylinder 10 anschließt und worin die Bohrung 18 zur Aufnahme des Gasgenerators 20 gebildet ist, einem zweiten, relativ dünnwandigen, rohrförmigen Gehäuseteil 12d, welches an das Gehäuseteil 12c anschließt, und einem das Gehäuseteil 12d an seinem vom Gasgenerator 20 abgewandten Ende verschließenden dritten Gehäuseteil 12e, das stopfenförmig ausgebildet ist. Die Gehäuseteile 12c, 12d und 12e werden miteinander sowie mit dem Zylinder 10, nachdem sie in Axialrichtung zusammengefügt worden sind, durch Verstemmen verbunden, wobei die Verbindung zwischen den Gehäuseteilen 12c und 12d mittels einer Zwischenhülse 68 erfolgt, die auch den Gasgenerator 20 in Axialrichtung abstützt.

Die schlanke Bauform wird bei dieser Ausführungsform dadurch erreicht, daß das Zugseil 16 durch eine schräg zur Achse des Gehäuseteils 12c nach außen verlaufende Bohrung 12f herausgeführt ist und auf der Außenseite der Gehäuseteile 12c, 12d, 12e in einem Kanal 69 geführt ist. Der Kanal 69 ist, wie aus Fig. 13 ersichtlich, in einer an der Außenseite der Gehäuseteile 12c, 12d und 12e längsverlaufenden Rippe gebildet, die zwar radial absteht, bei der Montage der Baugruppe in einer muldenförmigen Vertiefung des Fahrzeugaufbaus aber nicht störend in Erscheinung tritt.

Eine weitere Besonderheit der Ausführungsform nach den Figuren 12 bis 15 besteht in der Ausbildung und Anordnung des Schlagteils 32. Dieses ist als allgemein zylindrischer Stab ausgebildet, der koaxial in einer Blindbohrung 26e der aus zwei Teilen 26c, 26d zusammengesetzten Sensormasse verschiebbar aufgenommen ist. Die das Schlagteil 32 beaufschlagende Druckfeder 34 ist in dem dem Gehäuseteil 12e benachbarten Teil 26d der Sensormasse aufgenommen und stützt sich mit ihrem einen Ende an der benachbarten Stirnfläche des Schlagteils 32 und mit ihrem anderen Ende am Boden der Blindbohrung 26e ab, worin die Druckfeder 34 aufgenommen ist. Ein einarmiger Hebel 70 ist mittels eines Stiftes 72 in einem axialen Schlitz 74 an der Außenseite des Teils 26c der Sensormasse schwenkbar gelagert. Dieser Hebel 70 ist an seinem freien Ende als Haken ausgebildet und greift mit diesem Haken in eine Umfangsnut des Schlagteils 32, die eine allgemein radiale Schulter 32a bildet. Auf seiner dem Haken gegenüberliegenden Seite ist der Hebel 70 mit einem radial auswärts gerichteten Stützteil 70a versehen, mit welchem sich der Hebel 70 an einer radial einwärts gerichteten Stufe 76 des Gehäuseteils 12d abstützt. Diese Stufe 76 bildet auf ihrer dem Gasgenerator 20 zugewandten Seite eine radiale Schulter, die ein Ausweichen des Stützteils 76 zuläßt, wenn die Sensormasse 26c, 26d entgegen der Kraft der im Inneren der Zwischenhülse 68 angeordneten Druckfeder 36 durch Massenträgheit verschoben wird. Der Haken am Ende des Hebels 70 kommt dann von der radialen Schulter 32a des Schlagteils 32 frei, so daß dieses durch die Druckfeder 34 gegen den Gasgenerator 20 getrieben wird.

Um eine sichere Handhabung des Linearantriebs bei dessen Lagerung, Transport und Montage zu gewährleisten, ist er mit einer Montagesicherung versehen. Diese Montagesicherung ist durch eine am Umfang des Gehäuseteils 12e festgelegte Blattfeder 80 gebildet, die einen freien Schenkel aufweist, welcher bei dem in Fig. 12 dargestellten, gesicherten Ruhezustand des Linearantriebs an einer radialen Schulter 26f eines mit einer Nut versehenen, axialen Fortsatzes des Teils 26d der Sensormasse angreift. Der freie Schenkel der Blattfeder 80 ragt durch eine fensterartige Öffnung aus dem Gehäuseteil 12d nach außen und wird bei der Montage der Baugruppe, wie in Fig. 13 dargestellt, ausgelenkt, so daß er von der radialen Schulter 26f freikommt und die Sensormasse entsichert.

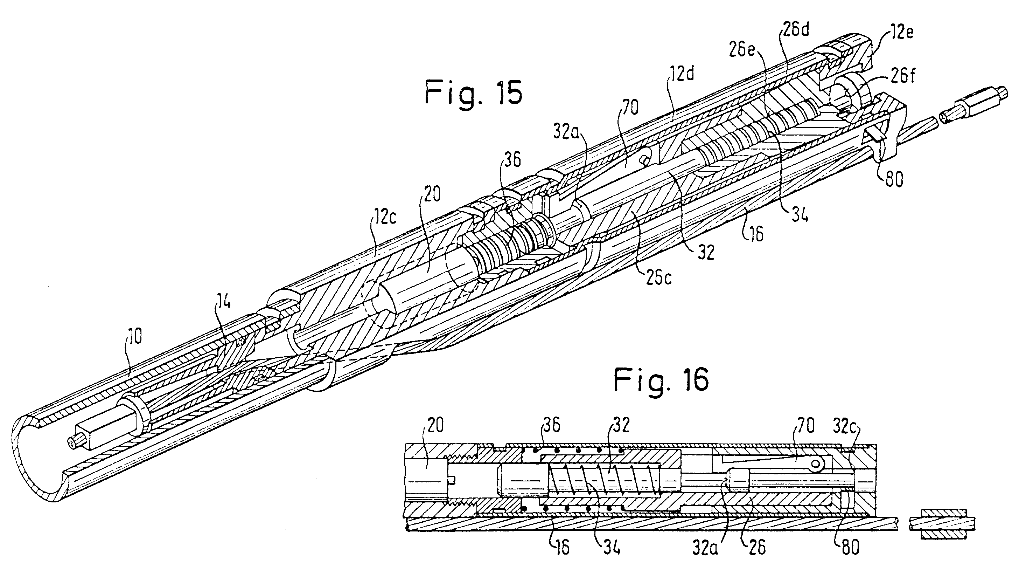

Die Ausführungsform nach Fig. 16 unterscheidet sich von der nach den Figuren 12 bis 15 durch die Form des Schlagteils 32 und die Anordnung des Hebels 70 an dem vom Gasgenerator 20 abgewandten Ende der hier einteilig ausgebildeten Sensormasse 26. Ferner greift die zur Montagesicherung vorgesehene Blattfeder 80 nicht an der Sensormasse 26, sondern an dem Schlagteil 32 an, das ein axial aus der Sensormasse 26 herausragendes Ende aufweist, an dem durch eine Nut eine radiale Schulter 32c gebildet ist.

Bei den Ausführungsformen nach den Figuren 12 bis 15 sowie 16 liegt die Schwenkachse des Hebels 70 in bezug auf die Angriffsfläche des Hakens am Schlagteil 32 radial außen, so daß der Hebel 70 mit einem Öffnungsmoment belastet ist, also bestrebt ist, radial auswärts verschwenkt zu werden, um das Schlagteil 32 freizugeben. Um ein sicheres Lösen des Hebels 70 von der radialen Schulter 32a des Schlagteils 32 zu gewährleisten, kann diese Schulter 32a - wie in der Zeichnung angedeutet - um einen geringen Winkel schräg zur Radialrichtung geneigt sein.

## Patentansprüche

1. Linearantrieb für einen Gurtstraffer in einem Fahrzeug-Sicherheitsgurtsystem, mit einem Zylinder (10), in dem ein Kolben (14) verschiebbar aufgenommen ist, einem pyrotechnischen Gasgenerator (20), der einen Schlagzünder aufweist, einer fahrzeugsensitiven Sensormasse (26), die in einem am Fahrzeugaufbau zu befestigenden Gehäuse (12) verschiebbar angeordnet ist, und einem Schlagteil (32), das durch eine Arretiereinrichtung in einer Ruhestellung im Abstand von dem Schlagzünder des Gasgenerators (20) gehalten und durch Federkraft in Richtung gegen den Schlagzünder belastet ist, wobei die durch die Arretiereinrichtung bewirkte Arretierung des Schlagteils (32) durch Bewegung der Sensormasse (26) lösbar ist und der Kolben (14) durch die vom Gasgenerator (20) bei durch Aufschlagen des Schlagteils (32) auf dem Schlagzünder ausgelöster Aktivierung freigesetzten Druckgase beaufschlagt wird, dadurch gekennzeichnet, daß das Gehäuse (12) in der Verlängerung des Zylinders (10) angeordnet und mit diesem starr verbunden ist, daß die Sensormasse (26) und das Schlagteil (32) in zueinander und zur Achse des Zylinders (10) parallelen Richtungen verschiebbar sind und daß die Arretiereinrichtung ein quer zur Achse des Gehäuses (12) bewegbares Arretierteil (48; 60) aufweist, an dem sich das Schlagteil (32) in seiner Ruhestellung abstützt.

2. Linearantrieb nach Anspruch 1, dadurch gekennzeichnet, daß die Sensormasse (26) einen Kanal (30) aufweist, worin das Schlagteil (32) verschiebbar aufgenommen und geführt ist.

3. Linearantrieb nach Anspruch 1 oder 2, dadurch gekennzeichnet, daß das Gehäuse (12) ein verjüngt zum Zylinder (10) hin auslaufendes Ende (12a), in welches der Gasgenerator (20) eingesetzt ist, und einen daran anschließenden hohlzylindrischen Abschnitt (12b) aufweist, worin die Sensormasse (26) verschiebbar aufgenommen ist.

4. Linearantrieb nach Anspruch 3, dadurch gekennzeichnet, daß in das von dem Zylinder (10) abgewandte Ende des Gehäuses (12) ein Verschlußstück (42) eingesetzt ist, an dem wenigstens ein Führungszapfen (44, 46) befestigt ist, der in eine entsprechende Führungsbohrung der Sensormasse (26) eingreift.

5. Linearantrieb nach einem der vorstehenden Ansprüche, dadurch gekennzeichnet, daß das Schlagteil (32) durch eine an der Sensormasse (26) abgestützte Druckfeder (34) vorbelastet ist.

6. Linearantrieb nach einem der Ansprüche 2 bis 5, dadurch gekennzeichnet, daß das Arretierteil (48) in einer zur Achse der Sensormasse (26) senkrechten Durchgangsöffnung verschiebbar geführt ist und an seinem ersten Ende mit einer Rampenfläche in den Kanal (30) hineinragt, in dem das Schlagteil (32) geführt ist, und an seinem zweiten Ende mit einer Abstützfläche in eine Ausnehmung (26a) der Sensormasse (26) hineinragt, in die sich ein am Gehäuse (12) befestigtes Stützteil (50) erstreckt, daß die Rampenfläche am ersten Ende des Arretierteils (48) mit einer entsprechenden Rampenfläche des Schlagteils (32) in Eingriff steht sowie die Abstützfläche am zweiten Ende des Arretierteils (48) an einer gegenüberliegenden Stützfläche des Stützteils (50) in Anlage ist und daß diese Stützfläche in Richtung der Verschiebung der Sensormasse (26) eine Ausdehnung aufweist, durch die der Hub der Sensormasse bis zur Lösung der Arretierung des Schlagteils bestimmt ist.

7. Linearantrieb nach Anspruch 6, dadurch gekennzeichnet, daß die Stützfläche an beiden axialen Enden durch einen radialen Rücksprung begrenzt ist, der das Arretierteil (48) bei ausreichender Verschiebung der Sensormasse (26) zur Freigabe des Schlagteils (32) ausweichen läßt.

8. Linearantrieb nach Anspruch 7, dadurch gekennzeichnet, daß die Sensormasse (26) durch eine vorgespannte Druckfeder (36), die an beiden axialen Enden sowohl an der Sensormasse (26) als auch an dem Gehäuse (12) abgestützt ist, in einer stabilen Ruhestellung gehalten ist.

9. Linearantrieb nach einem der Ansprüche 1 bis 5, dadurch gekennzeichnet, daß das Arretierteil (60) an einem schwenkbar an der Sensormasse (26) gelagerten Bügel (62) gebildet ist, der durch die Federbelastung des Schlagteils (32) bestrebt ist, das Arretierteil (60) aus der Bahn des Schlagteils (32) zu verschwenken, und daß das Arretierteil (60) radial auf einer gehäusefesten Stützfläche (50) abgestützt ist.

10. Linearantrieb nach Anspruch 1, dadurch gekennzeichnet, daß die Sensormasse (26c, 26d) rohrförmig ausgebildet und das stabförmig ausgebildete Schlagteil (32) koaxial in der Sensormasse verschiebbar aufgenommen ist.

11. Linearantrieb nach Anspruch 10, dadurch gekennzeichnet, daß an dem Kolben (14) ein Zugseil (16) befestigt ist, das durch einen schräg zur Achse des Zylinders verlaufenden Kanal (12f) aus dem Gehäuse (12c) heraus und anschließend entlang der Außenwandung des Gehäuses geführt ist.

12. Linearantrieb nach Anspruch 10 oder 11, dadurch gekennzeichnet, daß das Arretierteil als Haken am Ende eines in einem Längsschlitz (74) der Sensormasse (26c) schwenkbar gelagerten Hebels (70) ausgebildet ist, der ein Abstützteil (70a) aufweist, mit welchem er an einer durch eine radiale Schulter begrenzten Stufe (76) im Inneren des Gehäuses (12d) radial abgestützt ist.

13. Linearantrieb nach Anspruch 12, dadurch gekennzeichnet, daß der Haken des Hebels (70) an einer allgemein radialen Schulter (32a) des Schlagteils (32) angreift.

14. Linearantrieb nach Anspruch 13, dadurch gekennzeichnet, daß die Schwenkachse des Hebels (70) radial außerhalb der radialen Schulter (32a) gelegen ist.

15. Linearantrieb nach einem der Ansprüche 10 bis 14, dadurch gekennzeichnet, daß das stabförmige Schlagteil (32) ein aus der rohrförmigen Sensormasse (26) axial herausragendes Ende aufweist, das mit einer radialen Schulter (32c) versehen ist, und daß ein Sicherungselement (80) vorgesehen ist, das zwischen einer ersten Stellung, in welcher es an der radialen Schulter (32c) angreift, und einer zweiten Stellung, in der es das Schlagteil (32) freigibt, beweglich ist sowie durch Federkraft in die erste Stellung beaufschlagt und durch Anlage eines aus dem Gehäuse (12) herausragenden Teils an einer Montagefläche in die zweite Stellung bewegbar ist.

16. Linearantrieb nach einem der Ansprüche 10 bis 15, dadurch gekennzeichnet, daß das Gehäuse aus mehreren in Axialrichtung zusammenfügbaren und starr miteinander verbindbaren, rohrförmigen Gehäuseteilen (12c, 12d, 12e) besteht.

17. Linearantrieb nach Anspruch 12, 13 oder 14, dadurch gekennzeichnet, daß der Hebel (70) an demjenigen Ende der Sensormasse (26) angeordnet ist, welches dem Gasgenerator (20) zugewandt ist, und daß die das Schlagteil (32) belastende Feder (34) in einer Blindbohrung (26e) der Sensormasse (26c, 26d) aufgenommen ist und sich mit ihrem einen Ende am Boden der Blindbohrung (26e) sowie mit ihrem anderen Ende an der von dem Gasgenerator (20) abgewandten Stirnfläche des Schlagteils (32) abstützt.

18. Linearantrieb nach Anspruch 17, dadurch gekennzeichnet, daß die Sensormasse (26d) an ihrem von dem Gasgenerator (20) abgewandten Ende eine radiale Schulter (26f) aufweist und daß ein Sicherungselement (80) vorgesehen ist, das zwischen einer ersten Stellung, in welcher es an der radialen Schulter (26f) angreift, und einer zweiten Stellung, in der es die Sensormasse (26c, 26d) freigibt, beweglich ist sowie durch Federkraft in die erste Stellung beaufschlagt und durch Anlage eines aus dem Gehäuse (12e) herausragenden Endes an einer Montagefläche in die zweite Stellung bewegbar ist.

## Claims

1. A linear drive for a belt tensioner in a vehicle safety belt system comprising a cylinder (10) in which a piston (14) is slidably accommodated, a pyrotechnical gas generator (20) having an impact fuse, a vehicle-sensitive sensor inertial body (26) slidably arranged in a housing (12) to be secured to the vehicle body, and a striker (32) which is held in a rest position by locking means spaced away from the impact fuse of the gas generator (20) and spring-loaded in the direction against the impact fuse, striker (32) locking by the locking means being releasable by movement of the sensor inertial body (26) and the piston (14) being impacted by the compressed gases liberated from the gas generator (20) as activated by the striker (32) hitting the impact fuse, characterized in that the housing (12) is arranged in the longitudinal extension of the cylinder (10) to which it is rigidly connected, in that sensor inertial body (26) and striker (32) are slidable in directions parallel to each other and to the axis of the cylinder (10), and in that the locking means has a locking member (48; 60) movable transversely to the axis of the housing (12), said striker (32) being supported in its rest position by said locking member.

2. A linear drive as set forth in claim 1, characterized in that the sensor inertial body (26) has a passage (30) in which the striker (32) is slidably accommodated and guided.

3. A linear drive as set forth in claim 1 or 2, characterized in that the housing (12) has a tapered end (12a) towards the cylinder (10) in which the gas generator (20) is inserted, and an adjoining tubular cylinder portion (12b) in which the sensor inertial body (26) is slidably accommodated.

4. A linear drive as set forth in claim 3, characterized in that in the end of the housing (12) facing away from the cylinder (10) a closure part (42) is inserted, to which at least one guide pin (44, 46) is secured to engage in a corresponding guide hole of the sensor inertial body (26).

5. A linear drive as set forth in any of the above claims, characterized in that the striker (32) is preloaded by a compression spring (34) supported by the sensor inertial body (26).

6. A linear drive as set forth in any of the claims 2 thru 5, characterized in that the locking member (48) is slidably arranged in a thru-hole located vertically to the longitudinal axis of the sensor inertial body (26), the first end of which projects by a ramp surface into the passage (30) in which the striker (32) is guided, and the second end of which has a supporting surface projecting into a concavity (26a) of the sensor inertial body (26) into which a supporting member (50) secured to the housing (12) projects, in that the ramp surface at the first end of the locking member (48) engages a corresponding ramp surface of the striker (32) and the supporting surface at the second end of the locking member (48) being in contact with an opposing supporting surface of the supporting member (50), and in that this supporting surface has in the direction of shifting of the sensor inertial body (26) an extension defining the stroke of the sensor inertial body up to release of the striker.

7. A linear drive as set forth in claim 6, characterized in that the supporting surface on both axial ends is delimited by a radial set back which allows the locking member (48) to recede upon sufficient shifting of the sensor inertial body (26), thereby releasing the striker (32).

8. A linear drive as set forth in claim 7, characterized in that the sensor inertial body (26) is maintained in a stable rest position by a preloaded compression spring (36), both ends of which are supported on both the sensor inertial body (26) and on the housing (12).

9. A linear drive as set forth in any of the claims 1 thru 5, characterized in that the locking member (60) is defined on a bracket (62) swivably mounted on the sensor inertial body (26), the bracket (62) tending due to the spring loading of the striker (32) to swivel the locking member (60) out of the path of the striker (32) and in that the locking member (60) is radially supported by a supporting surface (50) integral to the housing.

10. A linear drive as set forth in claim 1, characterized in that the sensor inertial body (26c, 26d) is tubular in shape and the rod-shaped striker (32) is slidably located coaxially in the sensor inertial body.

11. A linear drive as set forth in claim 10, characterized in that a cable (16) is secured to the piston (14), said cable being guided through a channel (12f) oriented slanting to the axis of the cylinder, out of the housing (12c) and along the outer wall of the housing.

12. A linear drive as set forth in claim 10 or 11, characterized in that the locking part is formed as a hook at the end of a lever (70) rotatably mounted in a longitudinal slot (74) of the sensor inertial body (26c), said lever incorporating a supporting section (70a) with which it is radially supported by a step (76) radially defined by a shoulder within the housing (12d).

13. A linear drive as set forth in claim 12, characterized in that the hook of the lever (70) engages a generally radial shoulder (32a) of the striker (32).

14. A linear drive as set forth in claim 13, characterized in that the swivel axis of the lever (70) is located radially outside of the radial shoulder (32a).

15. A linear drive as set forth in any of the claims 10 thru 14, characterized in that the rod-shaped striker (32) has an end protruding axially from the tubular sensor inertial body (26), said end being provided with a radial shoulder (32c) and in that a locking member (80) is included which is movable between a first position in which it engages the radial shoulder (32c) and a second position in which it releases the striker (32) and which is forced into the first position by spring force and is movable into the second position by contact of a part protruding from the housing (12) with a mounting surface.

16. A linear drive as set forth in any of the claims 10 thru 15, characterized in that the housing comprises a plurality of tubular housing sections (12c, 12d, 12e) which may be jointed together in axial direction and rigidly connected to each other.

17. A linear drive as set forth in any of the claims 12, 13 or 14, characterized in that the lever (70) is arranged at the end of the sensor inertial body (26) which faces the gas generator (20) and in that the spring (34) loading the striker (32) is accommodated in a blind hole (26e) of the sensor inertial body (26c, 26d) and is supported at its one end by the bottom of the blind hole (26e) and at its other end by the end surface of the striker (32) opposite the gas generator (20).

18. A linear drive as set forth in claim 17, characterized in that the sensor inertial body (26d) has a radial shoulder (26f) at its end opposite the gas generator (20) and in that a locking member (80) is provided which is movable between a first position in which it engages the radial shoulder (26f) and a second position in which its releases the sensor inertial body (26c, 26d) and which is forced into the first position by spring force and is movable into the second position by contact of an end protruding from the housing (12e) with a mounting surface.

## Revendications

1. Commande linéaire d'un tendeur de ceinture d'un système de ceinture de sécurité de véhicule, comprenant un cylindre (10) dans lequel un piston (14) est logé coulissant, un générateur pyrotechnique de gaz (20) qui est équipé d'une amorce à percussion, une masse de détection (26) qui est sensible au véhicule et qui est montée déplaçable dans un boîtier (12) destiné à être fixé sur la carrosserie du véhicule et un élément de percussion (32) qu'un dispositif de blocage retient en position de repos à distance de l'amorce à percussion du générateur de gaz (20) et qui est soumis à la force d'un ressort orientée vers l'amorce à percussion, le blocage de l'élément de percussion (32) qui est produit par le dispositif de blocage étant libérable par le mouvement de la masse de détection (26) et le piston (14) étant exposé au gaz sous pression qui est dégagé par le générateur de gaz (20) lors de l'activation déclenchée par le choc de l'élément de percussion (32) sur l'amorce à percussion, caractérisée en ce que le boîtier (12) est disposé dans le prolongement du cylindre (10) et est solidarisé avec ce dernier, en ce que la masse de détection (26) et l'élément de percussion (32) sont déplaçables dans des directions parallèles l'une à l'autre et à l'axe du cylindre (10) et en ce que le dispositif d'arrêt comprend un organe d'arrêt (48 ; 60) qui est déplaçable perpendiculairement à l'axe du boîtier (12) et contre lequel l'élément de percussion (32) prend appui lorsqu'il est à la position de repos.

2. Commande linéaire selon la revendication 1, caractérisée en ce que la masse de détection (26) comprend un canal (30) dans lequel l'élément de percussion (32) est logé et guidé coulissant.

3. Commande linéaire selon la revendication 1 ou 2, caractérisée en ce que le boîtier (12) comprend une extrémité (12a) qui va en se rétrécissant vers le cylindre (10) et dans laquelle le générateur de gaz (20) est monté, ainsi qu'une partie cylindrique creuse (12b) qui en forme un prolongement et dans laquelle la masse de détection (26) est logée coulissante.

4. Commande linéaire selon la revendication 3, caractérisée en ce qu'une pièce obturatrice (42), à laquelle est fixé au moins un ergot de guidage (44, 46) qui pénètre dans un trou correspondant de guidage de la masse de détection (26), est montée à l'extrémité du boîtier (12) qui est tournée à l'opposé du cylindre (10).

5. Commande linéaire selon l'une des revendications précédentes, caractérisée en ce que l'élément de percussion (32) est sous la précontrainte d'un ressort de compression (34) qui prend appui contre la masse de détection (26).

6. Commande linéaire selon l'une des revendications 2 à 5, caractérisée en ce que l'organe d'arrêt (48) est guidé déplaçable dans un trou de traversée qui est perpendiculaire à l'axe de la masse de détection (26) et il pénètre par une surface en rampe de sa première extrémité dans le canal (30) dans lequel l'élément de percussion (32) est guidé, tandis que sa seconde extrémité pénètre par une surface d'appui dans un évidement (26a) de la masse de détection (26) dans lequel est disposé un élément d'appui (50) qui est fixé au boîtier (12), en ce que la surface en rampe de la première extrémité de l'organe d'arrêt (48) est en prise avec une surface correspondante en rampe de l'élément de percussion (32), tandis que la surface d'appui de la seconde extrémité de l'organe d'arrêt (48) est en application contre une surface d'appui opposée de l'élément d'appui (50), et en ce que cette surface d'appui a, dans la direction du déplacement de la masse de détection (26), une extension qui détermine la course de la masse de détection jusqu'au dégagement du blocage de l'élément de percussion.

7. Commande linéaire selon la revendication 6, caractérisée en ce que la surface d'appui est délimitée aux deux extrémités axiales par un retrait radial qui permet à l'organe d'arrêt (48) de se déporter lors d'un déplacement de la masse de détection (26) qui est suffisant pour libérer l'élément de percussion (32).

8. Commande linéaire selon la revendication 7, caractérisée en ce que la masse de détection (26) est retenue à une position stable de repos par un ressort de compression (36) qui est sous précontrainte et qui prend appui aux deux extrémités axiales d'une part contre la masse de détection (26) et d'autre part contre le boîtier (12).

9. Commande linéaire selon l'une des revendications 1 à 5, caractérisée en ce que l'organe d'arrêt (60) est formé sur un étrier (62) qui est monté pivotant sur la masse de détection (26) et qui, sous l'effet de la force du ressort de l'élément de percussion (32) qui s'exerce sur lui, tend à faire pivoter l'organe d'arrêt (60) pour l'écarter de la voie de l'élément de percussion (32), et en ce que l'organe d'arrêt (60) prend appui radialement sur une surface d'appui (50) qui est solidaire du boîtier.

10. Commande linéaire selon la revendication 1, caractérisée en ce que la masse de détection (26c, 26d) est tubulaire et l'élément de percussion (32) conformé en barre est logé coulissant coaxialement dans la masse de détection.

11. Commande linéaire selon la revendication 10, caractérisée en ce qu'un câble de traction (16) fixé au piston (14) sort du boîtier (12c) par un canal (12f) qui est oblique sur l'axe du cylindre et est guidé ensuite le long de la paroi extérieure du boîtier.

12. Commande linéaire selon la revendication 10 ou 11, caractérisée en ce que l'organe de blocage est conformé en crochet situé à l'extrémité d'un levier (70) qui est monté pivotant dans une fente longitudinale (74) de la masse de détection (26c) et qui comprend un élément d'appui (70a) par lequel il prend appui contre un redan (76) délimité par un épaulement radial à l'intérieur du boîtier (12d).

13. Commande linéaire selon la revendication 12, caractérisée en ce que le crochet du levier (70) attaque un épaulement généralement radial (32a) de l'élément de percussion (32).

14. Commande linéaire selon la revendication 13, caractérisée en ce que l'axe de pivotement du levier (70) est placé radialement à l'extérieur de l'épaulement radial (32a).

15. Commande linéaire selon l'une des revendications 10 à 14, caractérisée en ce que l'élément de percussion (32) en forme de barre comprend une extrémité qui sort axialement de la masse tubulaire de détection (26) et qui comporte un épaulement radial (32c) et en ce qu'un élément de blocage (80) qui est prévu est mobile entre une première position à laquelle il attaque l'épaulement radial (32c) et une seconde position à laquelle il libère l'élément de percussion (32) et cet élément de blocage est soumis à la force d'un ressort qui le retient à la première position et de plus il est déplaçable pour être mis à la seconde position par appui d'une partie qui est en saillie sur le boîtier (12) contre une surface de montage.

16. Commande linéaire selon l'une des revendications 10 à 15, caractérisée en ce que le boîtier est en plusieurs parties tubulaires (12c, 12d, 12e) qui s'assemblent en direction axiale et qui peuvent être solidarisées les unes avec les autres.

17. Commande linéaire selon la revendication 12, 13 ou 14, caractérisée en ce que le levier (70) est disposé à l'extrémité de la masse de détection (26) qui est tournée vers le générateur de gaz (20) et en ce que le ressort (34) qui agit sur l'élément de percussion (32) est logé dans un trou borgne (26e) de la masse de détection (26c, 26d) et prend appui à une extrémité contre le fond du trou borgne (26e) et à l'autre extrémité contre la surface extrême de l'élément de percussion (32) qui est située du côté opposé à celui du générateur de gaz (20).

18. Commande linéaire selon la revendication 17, caractérisée en ce que la masse de détection (26d) comporte un épaulement radial (26f) à l'extrémité tournée à l'opposé du générateur de gaz (20) et en ce qu'un élément de blocage (80) qui est prévu est mobile entre une première position à laquelle il attaque l'épaulement radial (26f) et une seconde position à laquelle il libère la masse de détection (26c, 26d) et cet élément de blocage est soumis à la force d'un ressort qui le retient à la première position et il est déplaçable pour être mis à la seconde position par appui d'une extrémité qui est en saillie sur le boîtier (12e) contre une surface de montage.
